**Europäisches Patentamt**

**European Patent Office**

**Office européen des brevets**

(19)

(11) Veröffentlichungsnummer: **0 177 436**

**B1**

(12) # EUROPÄISCHE PATENTSCHRIFT

(45) Veröffentlichungstag der Patentschrift:
31.05.89

(21) Anmeldenummer: **85730124.6**

(22) Anmeldetag: **17.09.85**

(51) Int. Cl.⁴: **H 04 N 1/028,** H 04 N 1/18

(54) **Abtasteinrichtung zur Beleuchtung und optischen Abtastung einer flächenhaften Vorlage.**

(30) Priorität: **19.09.84 DE 3434806**
**29.03.85 DE 3512098**
**24.05.85 DE 3519263**

(43) Veröffentlichungstag der Anmeldung:
**09.04.86 Patentblatt 86/15**

(45) Bekanntmachung des Hinweises auf die Patenterteilung:
**31.05.89 Patentblatt 89/22**

(84) Benannte Vertragsstaaten:
**DE FR GB IT NL**

(56) Entgegenhaltungen:
**EP-A-0 115 267**
**DE-A-3 145 952**
**GB-A-1 394 572**

(73) Patentinhaber: **Siemens Aktiengesellschaft Berlin und München, Wittelsbacherplatz 2, D-8000 München 2 (DE)**

(72) Erfinder: **Hagemeyer, Friedrich, Dr.- Ing., Corneliusstrasse 33, D-1000 Berlin 46 (DE)**
Erfinder: **Grethen, Hartmut, Dr.- Ing., Nusshäherstrasse 47u, D-1000 Berlin 27 (DE)**
Erfinder: **Hamann, Peter, Dipl.- Ing., Gotthardstrasse 22, D-1000 Berlin 51 (DE)**
Erfinder: **Meye, Wolfgang, Dr.- Ing., Popitzweg 7, D-1000 Berlin 13 (DE)**

EP 0 177 436 B1

LIBER, STOCKHOLM 1989

## Beschreibung

Die Erfindung betrifft eine Abtasteinrichtung zur mikrozeilenweisen Beleuchtung und optischen Abtastung einer flächenhaften Vorlage mit innerhalb einer Folie angeordneten mikrozeilenindividuellen Beleuchtungselementen, deren Längs- und Querabmessungen zumindest annähernd den Abmessungen der Mikrozeilen entsprechen, und mit in einer parallelen Ebene zu den Beleuchtungselementen senkrecht zu den Mikrozeilen angeordneten Lichtempfangselementen, an deren Kreuzungspunkten mit jeweils einer beleuchteten Mikrozeile das von dieser reflektierte Licht in die Lichtempfangselemente einkoppelbar ist.

Sie betrifft ferner eine Verwendung und ein Verfahren zum Betrieben einer solchen Abtastvorrichtung.

Bei einer aus der EP-A-0 115 267 bekannten Abtasteinrichtung sind Beleuchtungselemente in Form von mikrozeilenweise parallel nebeneinanderliegenden Lichtleitfasern vorgesehen, die auf ihren einer abzutastenden Vorlage zugewandten Seiten mit einem optischen Beugungsgitter zur mikrozeilenweisen Ausstrahlung von stirnseitig in die Lichtleitfasern eingekoppeltem Licht auf die Vorlage versehen sind. Senkrecht zu den Beleuchtungselementen sind Lichtempfangselemente in Form weiterer paralleler nebeneinanderliegender Lichtleitfasern mit ebenfalls einem optischen Beugungsgitter zur Einkopplung des von der Vorlage reflektierten Lichts in die Lichtleitfasern angeordnet, denen stirnseitig Lichtsensorelemente zur Erfassung des eingekoppelten Lichts zugeordnet sind.

Der Erfindung liegt die Aufgabe zugrunde, die Lichtverluste innerhalb der optischen Abtasteinrichtung möglichst gering zu halten.

Gemäß der Erfindung sind zur Lösung dieser Aufgabe bei der Abtasteinrichtung der eingangs angegebenen Art die Lichtempfangselemente als Fotoleiterstreifen ausgebildet.

Dabei wird eine besonders gute Erfassung des von den beleuchteten Bildpunkten reflektierten Lichtes dadurch erreicht, daß die Fotoleiterstreifen vorlagennäher als die Beleuchtungselemente angeordnet sind.

Die Realisierung der Fotoleiterstreifen kann beispielsweise dadurch erfolgen, daß die Fotoleiterstreifen jeweils eine Vielzahl von Fotoleiterelementen aufweisen, die in Längsrichtung des Fotoleiterstreifens jeweils in mikrozeilenindividuellen Abständen zueinander auf einer gemeinsamen transparenten Folienelektrode aufgebracht sind und daß die Fotoleiterelemente über eine kammförmige lichtundurchlässige Deckelektrode miteinander verbunden sind. Bei an die Elektroden angelegter Spannung fließt ein dem Lichteinfall in die Fotoleiterelemente proportionaler Fotostrom, wobei eine dem Fotostrom entsprechende Ladungsmenge durch die vorher aufgeladene Streifenkapazität abgegeben werden kann oder der jeweilige Fotostrom gemessen wird. Die Kapazität der Fotoleiterstreifen wird in vorteilhafter Weise durch die Unterteilung in die mikrozeilenindividuellen Fotoleiterelemente gering gehalten.

Die Herstellung der Fotoleiterstreifen läßt sich ohne wesentliche Beeinflussung ihrer Kapazität dadurch vereinfachen, daß die jeweils entlang einer Mikrozeile angeorndeten Fotoleiterelemente aller Fotoleiterstreifen aus einem einzigen zeilenförmigen Element bestehen und daß das jeweilige zeilenförmige Element in den Bereichen zwischen zwei benachbarten Deckelektroden lichtundurchlässig abgedeckt ist.

In bezug auf die zur Abtastung einer Vorlage erforderliche Abtastzeit ist festzustellen, daß diese umso kürzer ist, je mehr Bildpunkte der Vorlage gleichzeitig also parallel optisch abgetastet werden. Mit der Anzahl der gleichzeitig abzutastenden Bildpunkte steigt jedoch auch die Zahl der gleichzeitig parallel zu verarbeitenden Informationen (Daten) und dementsprechend der erforderliche Schaltungsaufwand an. Eine vorteilhafte Weiterbildung der erfindungsgemäßen Abtasteinrichtung, die bei einem nur geringfügig höheren Herstellungsaufwand eine beträchtliche Verringerung der Abtastzeit für die Abtastung einer Vorlage ermöglicht, besteht darin, daß jeder Fotoleiterstreifen in wenigstens zwei in Längsrichtung des Fotoleiterstreifens hintereinander gelegene Teilstreifen aufgeteilt ist und daß eine der Zahl der Teilstreifen entsprechende Anzahl von Beleuchtungselementen, die jeweils verschiedene Teilstreifen eines Fotoleiterstreifens kreuzen, gleichzeitig ansteuerbar sind. Es werden also gleichzeitig mehrere Mikrozeilen beleuchtet, wobei die Beleuchtungswerte der Bildpunkte verschiedener beleuchteter Mikrozeilen gleichzeitig von verschiedenen Teilstreifen der Fotoleiter detektiert und nachfolgend ausgewertet werden. Für eine Abtastung der gesamten Vorlage ist es daher nur noch erforderlich, die Mikrozeilen, die jeweils einen Teilstreifen der Fotoleiterstreifen kreuzen, nacheinander abzutasten so daß die Abtastzeit proportional zu der Zahl der Teilstreifen je Fotoleiterstreifen verkürzt wird. Eine weitere Verringerung der Abtastzeit ergibt sich aus der Verringerung der Streifenkapazität des Fotoleiterstreifens durch dessen Aufteilung in Teilstreifen. Die Ladungsdifferenz bzw. der Fotostrom der Teilstreifen kann dann jeweils gleichzeitig durch entsprechende Auswerteeinrichtungen erfaßt werden, wodurch eine Beschleunigung des Auswertevorganges erreicht wird.

Alternativ zu der vorstehend beschriebenen Weiterbildung der erfindungsgemäßen Abtasteinrichtung oder in Kombination hierzu ist eine Ausbildung der Abtasteinrichtung möglich, bei der den Fotoleiterelementen in Längsrichtung des Fotoleiters abwechselnd verschiedene Deckelektroden zugeordnet sind und die jeweils Fotoelemente mit verschiedenen Deckelektroden kreuzenden Beleuchtungselemente gleichzeitig ansteuerbar sind.

Eine vorteilhafte Ausgestaltung der Erfindung bezweckt die Schaffung von mikropunktindividuellen Austrittsbereichen entlang der Beleuchtungselemente und sieht in diesem Zusammenhang vor, daß bei Ausbildung der Beleuchtungselemente als Lichtleitkanäle, in deren Stirnflächen das Licht einer Lichtquelle einkoppelbar ist, die Lichtleitkanäle auf ihrer der Vorlage abgewandten Seiten im Bereich jedes Bildpunktes entlang einer Mikrozeile quer zur Längsrichtung des Lichtleitkanals ausgerichtete Kerben aufweisen und daß die der Lichtquelle zugewandten Kerbflächen unter einem Winkel von zumindest annähernd 45° gegen die Lichtleitkanalachse geneigt sind. Die Lichtstrahlen werden an den der Lichtquelle zugewandten Kerbflächen so reflektiert, daß sie annähernd senkrecht auf die Kanalwandung im Lichtaustrittsbereich des Lichtleitkanals auftreffen und somit aus diesem austreten können. Die Kompensation der entlang der Lichtleitkanäle exponentiell abnehmenden Strahldichte kann dadurch erfolgen, daß die Kerbtiefe von dem der Lichtquelle zugewandten Ende der Lichtleitkanäle ab entlang derselben zunimmt. An den der Lichtquelle zugewandten vorderen Kerbflächen wird demzufolge nur ein jeweils verhältnismäßig geringer Anteil des Lichts reflektiert, der größere Anteil dagegen innerhalb des Lichtleitkanals weitergeführt; diese Verhältnisse sind im Endbereich der Lichtleitkanäle umgekehrt.

Bei Einsatz einer konventionellen Leuchtstofflampe mit einem Lichtstrom von 1000 lm und einer annähernd gleichmäßigen Verteilung des Lichtes auf annähernd 2000 Bildpunkte, d. h. Austrittsbereiche entlang der Lichtleitkanäle ist eine Beleuchtungsstärke von annähernd 5 Lux auf einer Mikrozeile zu erzielen. Soll diese Beleuchtungsstärke weiter gesteigert bzw. trotz kleinerer Lichtquellen mit geringerem Lichtstrom beibehalten oder noch gesteigert werden, kann auch auf die gleichzeitige Lichtauskopplung aus allen Austrittsbereichen eines Lichtleitkanals verzichtet und dagegen zu einer gesteuerten punktweisen bzw. punktgruppenweisen aktiven Auskopplung von Licht aus einzelnen Austrittsbereichen übergegangen werden. Dies geschieht vorzugsweise derart, daß die Austrittsbereiche jedes Lichtleitkanals durch eine entlang desselben fortschreitende lokale Aufhebung der Totalreflexion sukzessive aktivierbar sind. Diese aktive Steuerung der Auskopplung aus den Austrittsbereichen der Lichtleitkanäle kann beispielsweise durch Schallwellen realisiert werden, wobei die Anzahl der gleichzeitig aktivierten Austrittsbereiche von der Form der Schallwelle abhängig ist. Bei Erzeugung eines Schallwellen-Solitons mit einer Pulsbreite von ca. 25 ns Dauer ist jeweils nur ein Austrittsbereich der erregten Lichtleitkanäle aktiviert. Zur Ausnutzung dieses akusto-optischen Effekts werden die Lichtleitkanäle mittels eines Schallgenerators im Bereich ihrer Stirnflächen impulsweise erregt. Sind die Austrittsbereiche der Lichtleitkanäle in der bereits beschriebenen Weise durch Kerben in den Lichtleitkanälen definiert, so ist der Bereich zwischen den beiden Kerbflächen jeder Kerbe vorteilhafterweise mit einem Material mit geringfügig höherem optischen Brechungsindex als dem des jeweiligen Lichtleitkanals ausgefüllt. Eine Lichtauskopplung durch Totalreflexion an einer Kerbe findet in diesem Fall nur dann statt, wenn der Brechungsindex des die Kerbe ausfüllenden Materials beispielsweise durch ein Schallwellen-Soliton auf einen Größenwert unterhalb dem des Lichtleitkanalmaterials verändert wird. Die lokale Aufhebung der Totalreflexion im Bereich der Austrittsbereiche der Lichtleitkanäle kann in gleicher Weise auch durch einen bekannten elektro-optischen Effekt (Pockels-Effekt) erzielt werden. Zu diesem Zwecke werden die Lichtleitkanäle entweder einzeln oder gemeinsam mit Elektrodenflächen ausgestattet.

Im Rahmen der Erfindung sind aber auch Beleuchtungselemente möglich, die eine zentrale Lichtquelle oder den Stirnflächen der Lichtleitkanäle zugeordnete lichtleitkanalindividuelle Lichtquellen durch solche Lichtquellen substituieren, die neben der Lichterzeugung auch die Lichtverteilung entlang der Mikrozeile übernehmen. Eine vorteilhafte Weiterbildung der Erfindung sieht in diesem Zusammenhang vor, daß die Beleuchtungselemente durch einzeln schaltbare Elektrolumineszenzzeilen eines Elektrolumineszenzdisplays gebildet sind. Mit handelsüblichen Elektrolumineszenzdisplays sind dadurch ohne Schwierigkeiten Beleuchtungsstärken von etwa 20 Lux entlang einer Mikrozeilen zu erzielen.

Eine mikrozeilenweise Beleuchtung der abzutastenden Vorlage läßt sich auf weitere vorteilhafte Weise dadurch erreichen, daß die Beleuchtungselemente durch einzeln steuerbare Lichttorzeilen gebildet sind, die auf ihrer, der Vorlage abgewandten Seite beleuchtbar sind. Bei dieser Ausbildungsform der erfindungsgemäßen Abtasteinrichtung kann auf die Verwendung spezieller Lichtquellen verzichtet werden und statt dessen in einfacher Weise die Beleuchtung der Vorlage durch Umgebungslicht erfolgen; die mikrozeilenweise Beleuchtung erfolgt durch Steuerung der Transparenz der einzelnen Lichttorzeilen. Eine gleichmäßige Beleuchtung der Mikrozeilen läßt sich bei räumlich unausgeglichenem Umgebungslicht ggf. durch Auflegen einer teiltransparenten Folie (Milchglasscheibe) auf die Abtasteinrichtung erreichen. Zur Realisierung der steuerbaren Lichttorzeilen bieten sich Flüssigkristallzeilen an, deren Ansprechträgheit sich dadurch weniger nachteilig auswirkt, daß die Schaltzeit zwischen dem Ein- und Ausschalten einer Flüssigkristallzeile der Zeit entspricht, die zum Abtasten einer Mikrozeile erforderlich ist und somit ausreichend lang ist.

Im Hinblick auf eine vielseitige Verwendungsmöglichkeit der Abtasteinrichtung sieht eine vorteilhafte Weiterbildung der erfindungsgemäßen Abtasteinrichtung vor, daß zur bildpunktweisen Abtastung der Vorlage den Beleuchtungselementen eine Demultiplexeinrichtung mit beleuchtungselementindividuellen Datenausgängen zugeordnet ist, daß den Lichtempfangselementen eine Multiplexeinrichtung mit lichtempfangselementindividuellen Dateneingängen und einem Datenausgang nachgeordnet ist, an dem den abgetasteten Bildpunkten entsprechende elektrische Abtastsignale zur Verfügung stehen, daß der Demultiplexeinrichtung und der Multiplexeinrichtung eine Adressiereinrichtung zugeordnet ist, die an einem Adressenausgang mit einem Adresseneingang der Demultiplexeinrichtung und an einem weiteren Adressenausgang mit einem Adresseneingang der Multiplexeinrichtung verbunden ist, und daß die Adressiereinrichtung eingangsseitig an einer Programmsteuereinrichtung angeschlossen ist. Bei dieser Ausbildung läßt sich jeder Bildpunkt der abzutastenden Vorlage individuelle an der Kreuzungsstelleeines Beleuchtungselementes mit einem Lichtempfangselement mit verhältnismäßig geringem Schaltungsaufwand abtasten. Hierdurch ist beispielsweise die Möglichkeit gegeben, durch eine in der Programmsteuereinrichtung berechnete Auswahl der abzutastenden Bildpunkte die Vorlage in einem groben oder feinen Raster entsprechend schnell oder langsamer abzutasten. Dabei wird über die Adressiereinrichtung der Adressenwert des jeweiligen Beleuchtungselements und des jeweiligen Lichtempfangselementes an die Demultiplexeinrichtung bzw. an die Multiplexeinrichtung zur Aktivierung der entsprechenden Elemente abgegeben; an dem Datenausgang der Mulitplexeinrichtung steht dann der Abtastwert des adressierten Bildpunktes zur weiteren Auswertung zur Verfügung. Bestehen die Beleuchtungselemente aus Lichtleitkanälen, denen eine Lichttorkette mit einzeln schaltbaren lichtleitkanalindividuellen Ausgängen oder eine LED-Zeile mit einzeln schaltbaren LED-Zellen zugeordnet ist, so sind die Ausgänge der Lichttorkette bzw. die einzelnen LED-Zellen steuerseitig an den Datenausgängen der Demultiplexeinrichtung angeschlossen; sind die Beleuchtungselemente dagegen aus einzeln schaltbaren Elektrolumineszenzzeilen oder Lichttorzeilen gebildet, so können sie direkt an den entsprechenden Datenausgängen der Demultiplexeinrichtung angeschlossen sein. Entsprechend sind bei den Lichtempfangselementen je nach deren Ausbildung die Lichtsensoren oder Fotoleiterstreifen an den Datenausgängen der Multiplexeinrichtung angeschlossen.

In vorteilhafter Weise kann dem Datenausgang der Multiplexeinrichtung eine Auswerteeinrichtung nachgeordnet sein, die ausgangsseitig mit einem Abtastsignalausgang der Abtasteinrichtung und mit einem Eingang der Programmsteuereinrichtung verbunden ist. In der Auswerteeinrichtung wird das von der Mulitplexeinrichtung gelieferte Signal von Störgrößen befreit und in eine zur digitalen Weiterverarbeitung geeignete Signalform umgesetzt. Hierzu enthält die Auswerteeinrichtung in an sich aus der Fernkopiertechnik bekannter Weise Filterschaltungen, Analog-Digital-Wandler und Schwellwertschaltungen. Durch die ausgangsseitige Verbindung der Auswerteeinrichtung mit einem Eingang der Programmsteuereinrichtung wird ermöglicht, daß in der Programmsteuereinrichtung die ausgewerteten Abtastwerte zusammen mit ihren jeweiligen vonder Programmsteuereinrichtung berechneten Adressenwerten zur Verfügung stehen.

Im Hinblick auf die sich aus der oben angegebenen individuellen Auswahl der abzutastenden Bildpunkte ergebenden vielseitigen Verwendungsmöglichkeiten der erfindungsgemäßen Abtasteinrichtung ist gemäß einer Weiterbildung vorgesehen, daß im Randbereich der Folie entlang einer Spalte und entlang einer Zeile berührungsempfindliche Sensorfelder derart angeordnet sind, daß jedem Sensorfeld entlang der Spalte jeweils mehrere nebeneinanderliegende Beleuchtungselemente zugeordnet sind und jedem Sensorfeld entlang der Zeile jeweils mehrere nebeneinanderliegende Lichtempfangselemente zugeordnet sind, daß die berührungsempfindlichen Sensorfelder mit Dateneingängen der Programmsteuereinrichtung verbunden sind, die aus den berührten Sensorfeldern und der Anzahl der ihnen jeweils zugeordneten Beleuchtungselemente und Lichtempfangselemente jeweils eine Anfangsadresse und eine Endadresse zur Aktivierung der Datenausgänge der Demultiplexeinrichtung bzw. zur Aktivierung der Dateneingänge der Multiplexeinrichtung errechnet. Hierdurch wird auf besonders einfache und bedienungsfreundliche Weise eine ausschnittsweise Abtastung der Vorlage ermöglicht, indem durch Anwahl der berührungsempfindlichen Sensorfelder entlang der Spalte und der Zeile der abzutastende Ausschnitt bestimmt wird. Da die Abtastauflösung unabhängig von dem gewählten Abtastausschnitt gleich bleibt, ergibt sich bei der ausschnittweisen Abtastung in vorteilhafter Weise eine Verringerung der Abtastzeit. Die programmsteuereinrichtung errechnet aus den berührten Sensorfeldern entlang der Spalte die Anfangs- und Endadresse zur Steuerung der Mikrozeilenbeleuchtung durch die Demultiplexeinrichtung; ebenso werden aus den berührten Sensorfeldern entlang der Zeile die Anfangs- und Endadressen zur Auswahl der Lichtempfangselemente durch die Multiplexeinrichtung errechnet.

Die erfindungsgemäße Abtasteinrichtung bietet eine Vielzahl von Verwendungsmöglichkeiten insbesondere im Bereich der Bürogerätetechnik, die über den Bereich der Faksimile-, Kopier- oder Fernkopiertechnik hinausgehen. In diesem Zusammenhang ist erfindungsgemäß eine Verwendung der Abtasteinrichtung vorgesehen, bei der zur manuellen Anwahl von Speicherplätzen eines mit der Abtasteinrichtung verbundenen elektronischen Speichers als Vorlage eine Tastaturfolie optisch abgetastet wird, die auf ihrer Oberfläche markierte Tastenfelder trägt und in den markierten Tastenfeldern zumindest teilweise transparente Bereiche aufweist, daß in der Programmsteuereinrichtung aus dem jeweiligen Signal am Datenausgang der Multiplexeinrichtung und aus dem an den Adressenausgängen der Adressiereinrichtung anliegenden Adresswerten die abgedeckten Tastenfelder lokalisiert werden und daß in Abhängigkeit von den Adressenwerten der lokalisierten Tastenfelder die Anwahl der den einzelnen Tastenfeldern zugeordnete Speicherplätze erfolgt. Diese Verwendung ermöglicht zusätzlich zu der bereits genannten Funktion der erfindungsgemäßen Abtasteinrichtung als Vorlagenabtastgerät eine zusätzliche Nutzung der Abtasteinrichtung als berührungsempfindliches Eingabegerät zur Steuerung beispielsweise anderer Bürogeräte. Die Tastaturfolie wird von der erfindungsgemäßen Abtasteinrichtung abgetastet, wobei durch eine grobe Abtastauflösung - beispielsweise durch gleichzeitige Beleuchtung mehrerer Mikrozeilen - eine kurze Abtastzeit erreicht werden kann. Wird der zumindest teiltransparente Bereich eines Tastenfeldes abgedeckt, so erkennt die Programmsteuereinrichtung aufgrund der veränderten optischen Abtastwerte an dieser Stelle die Adressenwerte des abgedeckten Tastenfeldes und ermöglicht die Abarbeitung einer dem betätigten Tastenfeld zugeordneten Programmfunktion durch Zugriff auf einen entsprechenden, durch die ermittelten Adressenwerte definierten Speicherplatz in dem Speicher.

Um bei Verwendung verschiedener Tastaturfolien den einzelnen Tastenfeldern jeweils unterschiedliche Tastenfunktionen zuordnen zu können, wird vorteilhafterweise von der Abtasteinrichtung eine auf der Tastaturfolie aufgebrachte Identifizierungsmarkierung abgetastet; in der Programmsteuereinrichtung wird das durch Abtasten der Identifizierungsmarkierung erzeugte Abtasignal mit gespeicherten Identifizierungswörtern verglichen und bei Übereinstimmung zwischen dem Abtastsignal und einem der Identifizierungswörter erfolgt ein Programmzugriff auf ein dem Identifizierungswort zugeordnetes Programmteil. Auf diese Weise ordnet die Programmsteuereinrichtung automatisch jeder aufgelegten Tastaturfolie das zugehörige Programmteil zu, durch das die den einzelnen Tastenfeldern zugeordneten Speicherplätze mit den in ihnen abgespeicherten Tastaturfunktionen festgelegt werden.

Bei dem erfindungsgemäßen Verfahren zum Betreiben der erfindungsgemäßen Abtasteinrichtung wird zur Gewinnung von die jeweilige Position eines Eingabestiftes auf der Vorlage kennzeichnenden Adressen als Vorlage eine Eingabefolie verwendet, deren Reflexionsvermögen lokal über den Eingabestift veränderbar ist; in der Programmsteuereinrichtung wird durch erstmalige Abtastung der gesamten Eingabefolie wird die (Anfangs-) Position des Eingabestiftes auf der Eingabefolie ermittelt und nach Ermittlung der (Anfangs-) Position des Eingabestiftes wird fortlaufend die Eingabefolie in einem rechteckförmigen Ausschnitt um die Position des Eingabestiftes herum abgetastet, wobei nach jedem Abtasten des rechteckförmigen Ausschnittes in Abhängigkeit von der jeweils ermittelten Position des Eingabestiftes die Lage des Abtastausschnittes um die Position herum neu berechnet wird. Mit diesem Verfahren läßt sich die erfindungsgemäße Abtasteinrichtung als sogenannter Digitizer zur graphischen Eingabe von Kurvenzügen verwenden. Dadurch, daß zur Ermittlung der momentanen Position des Eingabestiftes die Eingabefolie fortlaufend lediglich in einem kleinen rechteckförmigen Ausschnitt um die jeweils zuvor ermittelte Position des Eingabestiftes abgetastet wird, ist die Abtastzeit zum Abtasten des Ausschnittes entsprechend gering, so daß der Eingabestift relativ rasch bewegt werden kann, ohne daß er in der Abtastzeit für den Ausschnitt den Randbereich des Ausschnittes überschreitet. Die Festlegung des jeweiligen momentanen rechteckförmigen Ausschnittes läßt sich sehr leicht in der Programmsteuereinrichtung ermitteln, weil bei der erfindungsgemäßen Abtasteinrichtung zu jedem ermittelten Bildpunkt die entsprechenden Adressenwerte zur Verfügung stehen.

Zur lokalen Änderung des Reflektionsvermögens der Eingabefolie durch den Eingabestift sind verschiedene Verfahren möglich. So kann gemäß der Erfindung das Reflektionsvermögen der Eingabefolie durch lokale Druckbeanspruchung der Eingabefolie mit dem Eingabestift erfolgen. Dies kann beispielsweise dadurch geschehen, daß durch die lokale Druckbeanspruchung die Ausrichtung von Flüssigkristallen einer Flüssigkristallschicht zwischen zwei transparenten Deckschichten der Eingabefolie verändert wird. Mit der lokalen Veränderung der Ausrichtung der Flüssigkristalle verändert sich auch das Reflexionsverhalten der Folie an dieser Stelle. Ein weiteres Verfahren zur Markierung der Position des Eingabestiftes auf der Eingabefolie sieht vor, daß durch die lokale Druckbeanspruchung eine farbige Flüssigkeit lokal aus dem Bereich zwischen zwei transparenten Deckschichten der Eingabefolie verdrängt wird. Alternativ hierzu kann die Eingabefolie auch eine temperaturempfindliche Farbschicht enthalten, wobei die lokale Änderung des Reflexionsvermögens der Eingabefolie durch lokale Aufheizung der Eingabefolie mit dem Eingabestift erfolgt. In diesem Fall kann beispielsweise in der Spitze des Eingabestiftes ein Aufheizelement angeordnet sein, das die lokale Erhitzung der Eingabefolie erwirkt. Es ist jedoch auch möglich, den Eingabestift als Elektrode auszubilden und die Eingabefolie mit einer leitenden, als Gegenelektrode dienenden Schicht zu versehen, so daß beim Aufsetzen des Eingabestiftes auf die Eingabefolie diese durch einen Stromfluß durch den Übergangswiderstand zwischen dem Eingabestift und der Eingabefolie lokal erhitzt wird.

Die erfindungsgemäße Abtasteinrichtung ermöglicht infolge ihrer flachen Ausbildung ihren Einsatz im unmittelbaren Arbeitsplatzbereich oder, sofern die Folie im Taschenformat ausgebildet ist, ihren Einsatz innerhalb eines Abtastgerätes im Taschenformat. Die Folie kann hierbei durch eine zusätzliche dünne Platte oder Schicht verstärkt sein, wodurch der Flexibilität der Folie entgegengewirkt wird. Insbesondere bei Einsatz der erfindungsgemäßen Abtasteinrichtung in einem solchen Abtastgerät im Taschenformat kann die Abtasteinrichtung durch einen mit ihr zu einem gemeinsamen Bauteil vereinigten Speicher ergänzt sein, der der Aufnahme der Bildinformationen einer bestimmten Anzahl von Vorlagen dient. Die die eigentliche Abtasteinrichtung beinhaltende Folie kann also an beliebiger Stelle auf eine Vorlage aufgelegt werden, wobei auch größere Vorlagen abschnittsweise abzutasten sind. Gemäß einer weiteren vorteilhaften Ausgestaltung der Erfindung kann zumindest in einem solchen Falle die Abtasteinrichtung durch ein mit ihr zu einem einheitlichen Bauteil vereinigtes Display zur Sichtbarmachung der gespeicherten Bildinformation ergänzt sein. Konstruktiv kann dies beispielsweise in der Weise geschehen, daß die Anzeigefläche des Displays und die Abtastfläche durch die zwei größten Flächen eines plattenförmigen Bauteils gebildet sind. Dies bietet zugleich den Vorteil, daß nach der Abtastung einer Fläche ohne Veränderung der Lage der Abtasteinrichtung sofort die aufgenommene Bildinformation kontrolliert und gegebenenfalls eine präzisere Lage der Abtasteinrichtung auf der abzutastenden Vorlage hergestellt werden kann.

Die erfindungsgemäße Abtasteinrichtung bietet aber auch die Möglichkeit, einen Leitungsanschluß an eine Systemschnittstelle eines Arbeitsplatzcomputers vorzusehen. Dies ist insbesondere dann von Vorteil, wenn die erfindungsgemäße Abtasteinrichtung in Form einer flachen Schreibtischauflage ausgestaltet ist, da somit eine Vielzahl von Bildinformationen abgespeichert und bei Bedarf beispielsweise auf einem Bildschirm wieder sichtbar gemacht werden können. Ebenso ist aber auch denkbar, daß eine Kopiereinrichtung, beispielsweise ein Fernkopierer, unter dem Steuereinfluß des Arbeitsplatzcomputers steht und Kopien der abgetasteten Vorlagen erzeugt. Mit dem Arbeitsplatzcomputer können dann notwendige Funktionsbefehle (z. B. "Kopieren") oder auch Zusatzinformationen (z. B. bibliographische Daten) erzeugt werden, die gemeinsam mit der Bildinformation abgespeichert und ebenfalls auf Papier kopiert werden können. Es ist aber auch möglich, insbesondere wenn die Abtasteinrichtung im Taschenformat ausgebildet ist, daß eine Tastenschaltereinrichtung zur Eingabe von Funktionsbefehlen und/oder gemeinsam mit der Bildinformation abzuspeichernden Zusatzinformationen an einem entsprechenden Abtastgerät angeordnet sind. Der permanente Anschluß an eine Systemschnittstelle eines Arbeitsplatzcomputers kann insbesondere im Falle der Einbettung der erfindungsgemäßen Abtasteinrichtung in ein Abtastgerät im Taschenformat auch wahlweise oder gänzlich ersetzt werden durch eine an ein entsprechendes Gegenstück einer datenverarbeitenden Einrichtung angepaßte Kontaktiereinrichtung. Mit dieser Kontaktiereinrichtung kann die Abtasteinrichtung bzw. das Abtastgerät jederzeit an eine entsprechende datenverarbeitende Einrichtung, z. B. einen Fernkopierer oder einen Arbeitsplatzcomputer angeschlossen werden.

Insgesamt bietet die erfindungsgemäße Abtasteinrichtung eine Fülle von neuartigen Anwendungsmöglichkeiten, die insbesondere auch die Ausnutzung bekannter bzw. vorhandener Geräte und Einrichtungen der Bürokommunikation implizieren.

Die Erfindung wird im folgenden anhand von Figuren erläutert, die in schematischer Darstellung Funktion und Aufbau einiger Realisierungen unterschiedlicher Bestandteile der erfindungsgemäßen Abtasteinrichtung zeigen.

Figur 1 veranschaulicht die durch die Beleuchtungselemente und die Lichtempfangselemente gebildete typische Struktur der erfindungsgemäßen Abtasteinrichtung.

In Figur 2 ist eine Realisierung der Beleuchtungselemente durch Elektrolumineszenzzeilen dargestellt, während Figur 3 ein Ausführungsbeispiel eines Lichtleitkanals mit mikropunktindividuellen Austrittsbereichen darstellt.

Die Figur 4 veranschaulicht in schematischer Darstellung das Prinzip der aktiv gesteuerten Auskopplung von Licht aus einem Lichtleitkanal.

Figur 5 zeigt - ebenfalls schematisch - ein Ausführungsbeispiel für ein Lichtempfangselement.

In der Figur 6 ist eine schematische Darstellung des baulichen Gesamtkonzepts.

Figur 7 zeigt einen Ausschnitt aus einem bevorzugten Ausführungsbeipiel der erfindungsgemäßen Abtasteinrichtung und in

Figur 8 ist ein Teilbereich des in Figur 7 gezeigten Ausführungsbeipiels dargestellt.

In der Figur 9 ist eine schematische Darstellung des Steuerungsgesamtkonzeptes der erfindungsgemäßen Abtasteinrichtung dargestellt.

Figur 10 zeigt in einem Blockschaltbild einen bevorzugten schaltungstechnischen Aufbau der erfindungsgemäßen Abtasteinrichtung. Zur Erläuterung der Einsatzmöglichkeiten der erfindungsgemäßen Abtasteinrichtung ist

in Figur 11 eine Vorlage in Form einer Tastaturfolie dargestellt, und

Figur 12 zeigt eine zur grafischen Eingabe von Kurvenzügen dienende Eingabefolie.

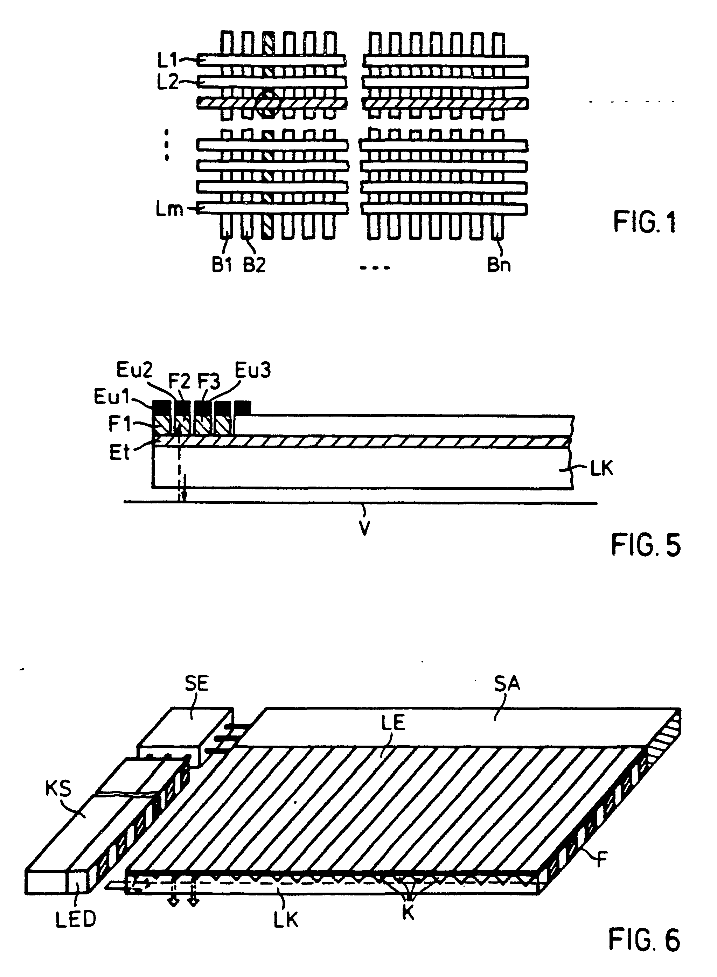

Die Figur 1 veranschaulicht die aus Beleuchtungselementen B1 ... Bn und Lichtempfangselementen L1 ...Lm gebildete Gitterstruktur, deren eine Ebene durch die Beleuchtungselemente B1 ... Bn und deren andere Gitterebene durch die Lichtempfangselemente L1 ... Lm gebildet ist. Die Beleuchtungselemente B1 ... Bn werden nacheinander aktiviert, was durch Einführung von Licht in die Stirnflächen der Beleuchtungselemente B1... Bn oder durch Aktivierung von jeweils als eines der Beleuchtungselemente B1 ... Bn dienenden Elektroluminszenzzeilen erfolgt. Die Beleuchtungselemente B1 ... Bn können auch aus einzelnen steuerbaren Lichttorzeilen beispielsweise in Form von Flüssigkristallzeilen bestehen, die nacheinander jeweils von einem lichtundurchlässigen Zustand in einen transparenten Zustand gesteuert werden, so daß bei einer Beleuchtung der Lichttorzeilen diese das Licht zeilenweise durchtreten lassen. Jeweils eine abzutastende Mikrozeile der Vorlage ist einem der Beleuchtungselemente B1 ... Bn zugeordnet, so daß die Beleuchtung der Vorlage zeilenweise erfolgt. Dies kann dadurch geschehen, daß zur gleichen Zeit die gesamte Mikrozeile beleuchtet ist; es können aber auch sukzessive nacheinander jeweils einem Bildpunkt der Mikrozeile zugeordnete Austrittsbereiche der Beleuchtungselemente aktiviert werden. Am Kreuzungspunkt der Beleuchtungselemente B1 ... Bn mit den Lichtempfangselementen L1 ... Lm weisen letztere Eintrittsbereiche auf, die das von der Vorlage reflektierte Licht aufnehmen. Die Abtastung erfolgt dabei von Lichtempfangselement zu Lichtempfangselement fortschreitend, wobei die Lichtempfangselemente das aufgenommene Licht zu einer allen Lichtempfangselementen L1. .. Lm gemeinsamen Auswerteeinrichtung führen, oder selbst als individuelle Lichtauswerteeinrichtungen ausgebildet sind.

Insgesamt liegt eine zeilenweise Beleuchtung und spaltenweise Abtastung der Vorlage vor.

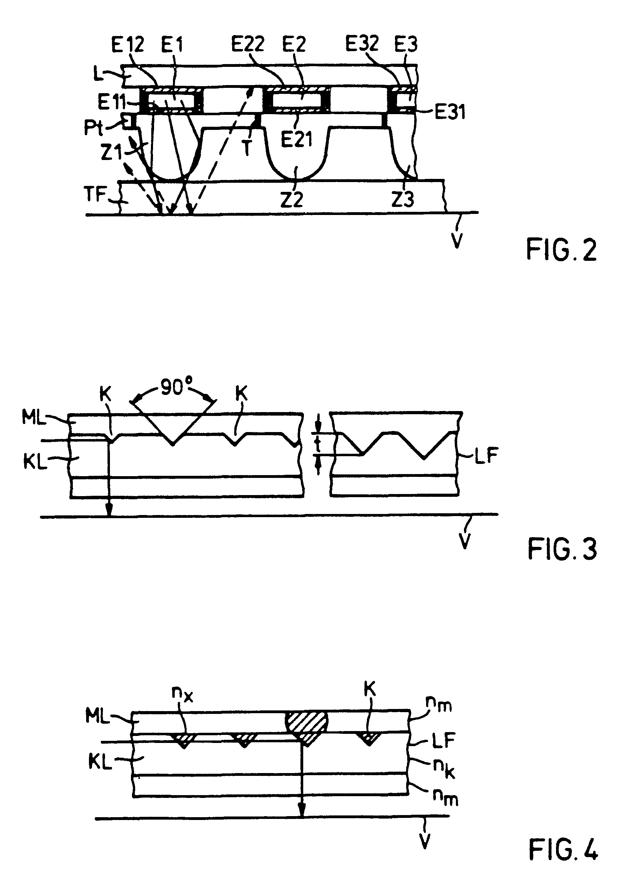

In der Figur 2 ist ein Ausführungsbeispiel für den Aufbau und die Anordnung der Beleuchtungselemente angegeben. Die Beleuchtungselemente sind jeweils durch Elektroluminszenzzeilen E1, E2, E3 eines Elektrolumineszenzdisplays gebildet, wobei jede der Elektroluminszenzzeilen E1, E2, E3 einer abzutastenden Vorlage V zugewandt eine transparente Elektrode E11, E21, E31 und den angrenzenden Lichtempfangselementen L zugewandt jeweils eine undurchlässige Elektrode E12, E22, E32 aufweist. In einer auf die transparenten Elektroden E11, E21, E31 aufgesetzten transparenten Platte Pt sind an deren Oberfläche jeweils zylindrische Linsen Z1, Z2, Z3 ausgebildet, die eine Konzentrierung des von den Elektroluminszenzzeilen E1, E2, E3 abgegebenen Lichtes auf die einzelnen Bildpunkte bewirken. Reflektierende Trennfugen T zwischen den einzelnen Zylinderlinsen Z1, Z2, Z3 bewirken eine Eliminierung bzw. Verringerung des Streulichts von benachbarten Bildpunkten. Die Zylinderlinsen Z1, Z2, Z3 sind durch eine transparente Folie TF abgedeckt, die den gewünschten Abstand der Zylinderlinsen Z1, Z2, Z3 von der Vorlage V definiert.

In dem in der Figur 3 gezeigten Ausführungsbeispiel eines Lichtleitkanals weist eine in bekannter Weise aus einem Kernleiter KL und einem Mantelleiter ML aufgebaute Lichtleitfaser LF Kerben K im Kernleiter KL auf. Die Kerben K befinden sich an der einer abzutastenden Vorlage V abgewandten Seite des Kernleiters KL und weisen einen Kerbwinkel von zumindest annähernd 90° auf. Das von links von einer nicht dargestellten Lichtquelle in die Lichtfaser LF eingespeiste Licht wird an den der Lichtquelle zugewandten Kerbflächen abgelenkt und trifft damit unter einem Winkel von annähernd 90° auf die Grenzschicht zwischen Kernleiter KL und Mantelleiter ML auf; damit ist ein Durchtritt von Licht durch den Mantelleiter ML ermöglicht. Um den exponentiellen Abfall der Strahldichte entlang der Lichtleitfaser LF auszugleichen, nimmt die Kerbtiefe 't' von dem der Lichtquelle zugewandten (linken) Ende der Lichtleitfaser LF ab entlang derselben zu.

In der Figur 4 ist in schematischer Darstellung das Prinzip der aktiv gesteuerten Auskopplung von Licht aus einer Lichtleitfaser dargestellt. Die Lichtleitfaser LF ist wiederum in bekannter Weise aus einem Mantelleiter ML und einem Kernleiter KL aufgebaut, wobei das Material des Kernleiters einen größeren optischen Brechungsindex $n_k$ als das des Mantelleiters ML ($n_m$) aufweist. An der Grenzschicht zwischen dem Kernleiter KL und dem Mantelleiter ML findet deshalb eine Totalreflexion statt. Der Brechungsindex ($n_m$) des Mantelleiters ML kann durch eine entlang der Lichtleitfaser LF fortschreitende Schallwelle verändert werden. Wenn die Schallwelle als sogenanntes Schallsoliton - Schallimpuls mit kurzer Impulsbreite - ausgebildet ist, entsteht ein entlang der Lichtleitfaser LF fortschreitender kleiner Bereich eines veränderten Brechungsindexes $n_m$ des Mantelleiters ML.

Die Lichtleitfaser LF ist gegenüber der der Figur 3 insofern verändert, als die Kerben K alle die gleiche Kerbtiefe aufweisen; außerdem ist der von den Kerbflächen begrenzte Raum mit einem Material angefüllt, das einen Brechungsindex $n^x$ aufweist, der geringfügig größer oder gleich groß wie der Brechungsindex $n^k$ des Kernleiters KL bemessen ist. Ein entlang der Lichtleitfaser LF geführter Schallwellenimpuls erzeugt sukzessive entlang der Kerben K fortschreitend in seinem Wirkungsbereich eine Verringerung des Brechungsindexes $n_x$ oder $n_k$ im Bereich zwischen den Kerben K. Sofern die Breite des Impulses nicht größer als der Abstand zwischen zwei Kerben K bemessen ist, wird jeweils nur im Bereich einer einzigen der Kerben K Licht aus der Lichtleitfaser LF auf einen Bildpunkt der Vorlage V ausgekoppelt.

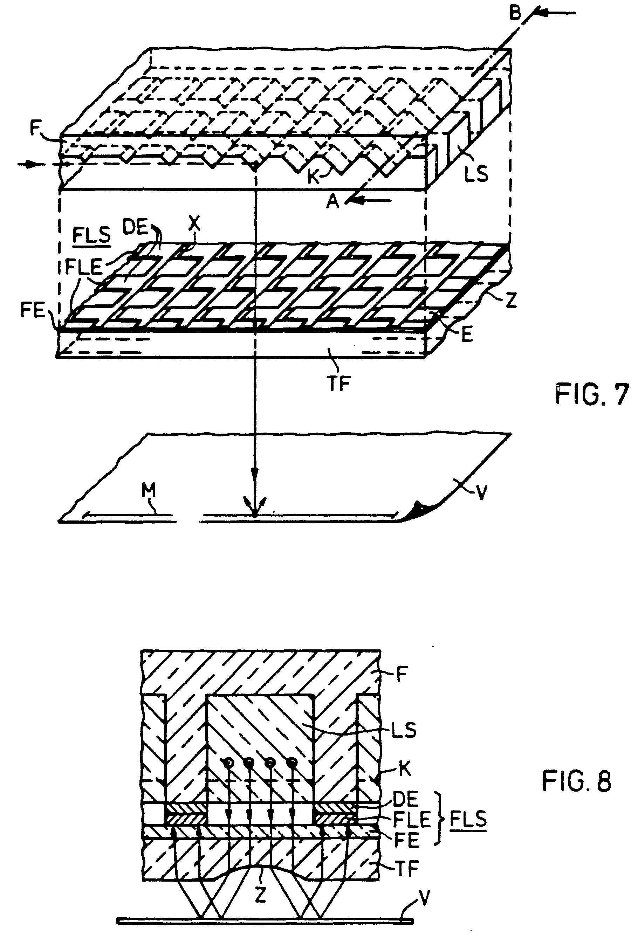

Die Figur 5 zeigt ein Ausführungsbeispiel einer das von der Vorlage reflektierte Licht aufnehmenden Lichtaufnahmeeinrichtung, bei der die einzelnen Lichtempfangselemente als Fotoleiterstreifen ausgebildet sind. Unmittelbar an die Oberfläche von Lichtleitkanälen LK, die von einer nicht dargestellten Lichtquelle in Pfeilrichtung gespeist werden, befindet sich eine alle Lichtleitkanäle LK überdeckende transparente Elektrode Et die sämtlichen Fotoleiterstreifen F1, F2, F3 ... gemeinsam zugeordnet ist. Jeder der Fotoleiterstreifen F1, F2, F3 weist eine individuelle undurchsichtige Elektrode Eu1, Eu2, Eu3 auf, die den auszuwertenden Ladestrom oder Fotostrom führt. Ein aus dem Lichtleitkanal LK ausgekoppelter Lichtstrahl (siehe Pfeil) wird von der Vorlage V reflektiert und gelangt durch die transparente Elektrode Et in den entsprechenden Fotoleiterstreifen - F2 - ; die dadurch bedingte Änderung des Fotostroms wird mittels einer nicht dargestellten fotoleiterstreifenindividuellen Auswerteeinrichtung erfaßt. Bei der dargestellten Anordnung durchläuft zumindest ein Teil des von der Vorlage V reflektierten Lichts durch den zugehörigen Lichtleitkanal LK.

Die Figur 6 zeigt in schematischer Darstellung ein Ausführungsbeispiel eines baulichen Konzeptes für die erfindungsgemäße Abtasteinrichtung.

Eine Folie F beinhaltet sowohl Lichtleitkanäle LK, deren Anzahl der Zahl der abzutastenden, Mikrozeilen entspricht, als auch das senkrecht dazu organisierte System von Lichtempfangselementen LE, deren Zahl identisch mit der Zahl der entlang einer Zeile abzutastenden Bildpunkte ist. Sowohl die Lichtleitkanäle LK als auch die Lichtempfangselemente LE sind in einem sehr groben Raster dargestellt. Die Lichtempfangselemente LE sind als Fotoleiterstreifen ausgebildet und an eine Steuer- und Auswerteeinrichtung SA angeschlossen. An einer Stirnfläche der Lichtleitkanäle LK befindet sich ein LED-Kamm LED; das von den einzelnen LED-Zellen erzeugte Licht wird mittels einer Kammsteuerung KS zeilenweise in die Lichtleitkanäle LK einkoppelt. Die Lichtleitkanäle LK weisen Kerben K zur Lichtauskopplung auf; die Kerbentiefe nimmt vom LED-Kamm LED ab entlang der Lichtleitkanäle LK stetig ab. Die Lichtführung ist durch Pfeile veranschaulicht.

Die Kammsteuerung KS und die Steuer- und Auswerteeinrichtung SA stehen beide unter dem Steuereinfluß einer zentralen Steuereinrichtung SE. Sämtliche Bauteile weisen die gleiche Dickenabmessung wie die Folie F auf, so daß durch die Zusammenfügung von Steuer- und Auswerteeinrichtung SA, Steuereinrichtung SE, LED-Kamm LED Kammsteuerung KS und Folie F eine entsprechend größere Folie gebildet ist, die beispielsweise als fläche Auflage auf einem Schreibtisch plaziert sein kann.

Figur 7 zeigt einen Ausschnitt aus einem bevorzugten Ausführungsbeispiel der erfindungsgemäßen Abtasteinrichtung. Dabei ist lediglich zur übersichtlicheren Darstellung der die Beleuchtungselemente aufweisende Teilbereich der Abtasteinrichtung getrennt von dem die Lichtempfangselemente enthaltenden Teilbereich dargestellt; beide Teilbereiche sind jedoch tatsächlich zu einem einzigen folienartigen Bauelement vereinigt, wie dies in Figur 8 in einem Schnitt AB durch einen Teilbereich der in Figur 7 gezeigten Abtasteinrichtung dargestellt ist.

In einer transparenten Folie F sind parallel nebeneinander liegend Lichtleitkanäle in Form von Lichtleitstäben LS derart eingebettet, daß die Lichtleitstäbe LS jeweils dreiseitig von der transparenten Folie F umschlossen sind; die jeweils freiliegenden Seiten der Lichtleitstäbe LS sind einer abzutastenden Vorlage V zugewandt. Die Lichtleitstäbe LS weisen auf ihren der Vorlage abgewandten Seiten - ähnlich wie dies in Figur 3 dargestellt ist - Kerben K auf, deren Kerbtiefe von den einer hier nicht dargestellten Lichtquelle im linken Bildbereich zugewandten Enden der Lichtleitstäbe LS ab entlang derselben zunimmt. Das von der Lichtquelle in die Lichtleitstäbe LS eingespeiste Licht wird an den der Lichtquelle zugewandten Kerbflächen abgelenkt und etwa im Winkel von 90° zu der Längsachse der Lichtleitstäbe LS aus diesen ausgekoppelt. Durch die entlang der Lichtleitstäbe LS gestaffelte Tiefe der Kerben K und durch gegebenenfalls erforderliche weitere Maßnahmen, wie z. B. eine Veränderung der Transparenz der zur Vorlage hingewandten Seiten der Lichtleitstäbe LS entlang ihrer Längsausdehnung wird eine gleichmäßige Lichtauskopplung entlang der einzelnen Lichtleitstäbe LS erreicht. Die transparente Folie F weist einen gegenüber den Lichtleitstäben LS geringeren optischen Brechungsindex auf, so daß die Lichtverluste in den Lichtleitstäben infolge Totalreflexion an den Grenzflächen zwischen den Lichtleitstäben LS und der Folie F sehr gering sind. Die Lichtleitstäbe LS lassen sich in der Folie F dadurch realisieren, daß beispielsweise in der Folie F eingeprägte, d. h. eingeritzte oder eingepreßte Nuten mit transparentem Füllmaterial ausgefüllt werden. Es ist aber auch möglich, eine Matrix mit Lichtleitstäben LS zu pressen und die Lichtleitstäbe LS mit einer Vergußmasse in eine Folie F zu gießen. Im Bereich der vorlagenzugewandten Seiten der Lichtleitstäbe LS sind senkrecht dazu Lichtempfangselemente in Form von Fotoleiterstreifen FLS angeordnet. Die Fotoleiterstreifen FLS weisen jeweils eine Vielzahl von Fotoleiterelementen FLE auf, die in Längsrichtung des jeweiligen Fotoleiterstreifens FLS in mikrozeilenindividuellen Abständen zueinander in Bereichen zwischen jeweils zwei Lichtleitstäben LS angeordnet sind. Eine herstellungstechnische Vereinfachung besteht darin, daß die jeweils entlang einer Mikrozeile M angeordneten Fotoleiterelemente FLE aller Fotoleiterstreifen FLS aus einem einzigen zeilenförmigen Element E bestehen. Die einzelnen Fotoleiterelemente FLE sind auf einer gemeinsamen transparenten vorlagennahen Folienelektrode FE aufgebracht; auf ihren vorlagenabgewandten Seiten sind die jeweils zu einem Fotoleiterstreifen FLS gehörenden Fotoleiterelemente FLE über eine kammförmige lichtundurchlässige Deckelektrode DE miteinander verbunden. Neben der Funktion, den Fotostrom oder eine entsprechende Ladungsmenge einer Auswerteeinrichtung zuzuführen, dient die Deckelektrode DE auch dazu, einen direkten Lichteinfall von den Lichtleitstäben LS zu den Fotoleiterelementen FLE zu verhindern. Aus diesem Grund sind jeweils die entlang einer Mikrozeile M zu einem zeilenförmigen Element E zusammengefaßten Fotoleiterelemente FLE jeweils in den Bereichen X zwischen den Deckelektroden DE benachbarter Fotoleiterstreifen FLS lichtundurchlässig abgedeckt. Die transparente Folienelektrode FE ist auf einer ebenfalls transparenten Tragfolie TF aufgebracht in der zur Verbesserung der Beleuchtung und Abtastung jedes einzelnen Bildpunktes der Vorlage V sowie zur Vermeidung von Störlichteinflüssen zwischen jedem Lichtleitstab LS und der Vorlage V eine streifenförmige Linse Z ausgebildet ist.

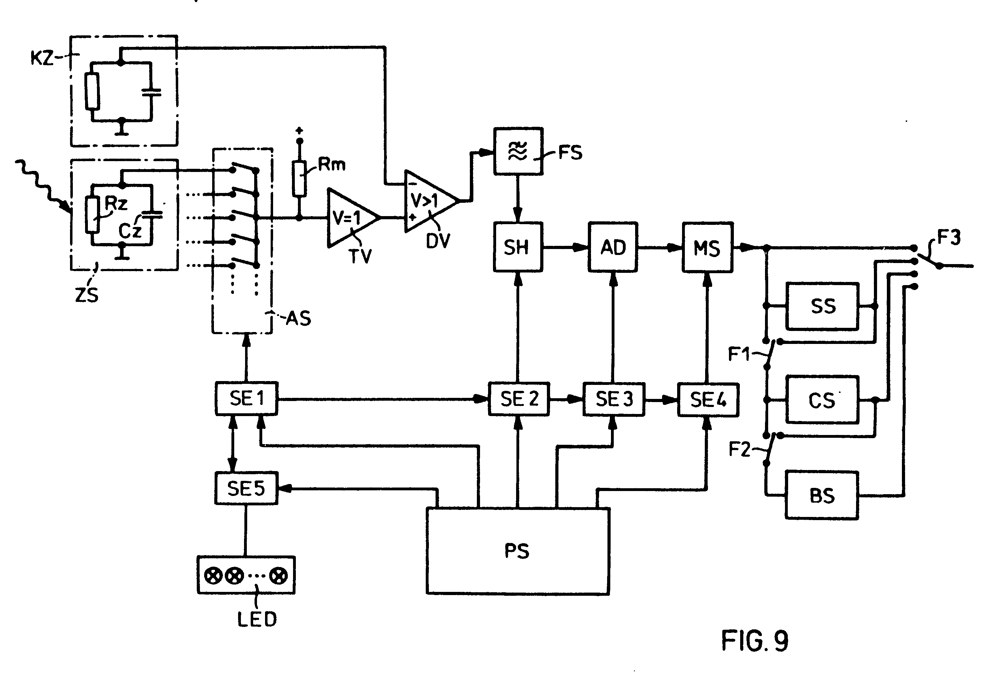

Die Figur 9 veranschaulicht ein Ausführungsbeispiel einer Steuerungsstruktur für die erfindungsgemäße Abtasteinrichtung. Es wird dabei davon ausgegangen, daß als Lichtquelle für die Lichtleitkanäle ein LED-Kamm LED mit einzeln schaltbaren Zellen eingesetzt ist; als Lichtempfangselemente dienen Lichtleiter, deren Licht einem Zeilensensor ZS zugeführt wird. Dem Zeilensensor ZS, der durch eine Ersatzschaltung eines Widerstandes Rz und einer Kapazität Cz repräsentiert ist, ist ein Analogschalter AS zugeordnet, der eine der Anzahl der Einzelzellen des Zeilensensors ZS entsprechende Zahl von Schaltern aufweist. Über diese Schalter wird sukzessiv das aus den Einzelzellen des Zeilensensors ZS ausgelesene Auswertesignal als Potential am Meßwiderstand Rm abgenommen und einem Trennverstärker TV mit der Verstärkung $V = 1$ zugeführt. Ein nachgeschalteter Differenzverstärker DV subtrahiert das Dunkelsignal einer nicht beleuchteten Kompensationszelle KZ vom Nutzsignal; damit wird eine Temperaturkompensation erreicht. Die nachgeordnete Filterschaltung FS trennt höher frequente Störspitzen vom Nutzsignal. Eine anschließende Sample und Hold-Schaltung SH tastet den jeweiligen Meßwert ab, der dann einem Analog-Digital-Wandler AD zugeführt wird, der die amplitudenanaloge zeitdiskrete Information in 8bit breite digitale Signale umsetzt. Damit sind 256 verschiedene Helligkeitswerte darstellbar. Die nachgeschaltete Multiplizierschaltung MS dient der Korrektur einer unterschiedlichen Beleuchtungsstärke längs einer Mikrozeile. Die Multiplizierschaltung MS kann ebenfalls dazu ausgenutzt werden unterschiedliche Empfindlichkeiten der eingesetzten Zeilensensoren ZS zu korrigieren.

Der Multiplizierschaltung MS sind weitere Schalteinrichtungen wie eine Schwellenschaltung SS, eine Codierschaltung CS zur eventuellen Redundanzreduktion und ein Bildinformations-Speicher BS nachgeschaltet. Je nach Stellung der Funktionsschalter F1, F2 bzw. des Ausgangsschalters F3 sind unterschiedlich aufbereitete Ausgangssignale der Multiplizierschaltung abnehmbar.

Der LED-Kamm LED, der Analogschalter AS, die Sample und Hold-Schaltung SH, der Analog-Digital-Wandler AD und die Multiplizierschaltung MS stehen sämtlich unter dem Steuereinfluß von ihnen individuell zugeordneten Steuereinrichtungen SE1 ... SE5; diese Steuereinrichtungen SE1 ... SE5 sind ihrerseits durch eine ihnen hirarchisch übergeordnete Programmsteuereinrichtung PS gesteuert, die beispielsweise durch einen Einchip-Mikrocomputer realisiert ist.

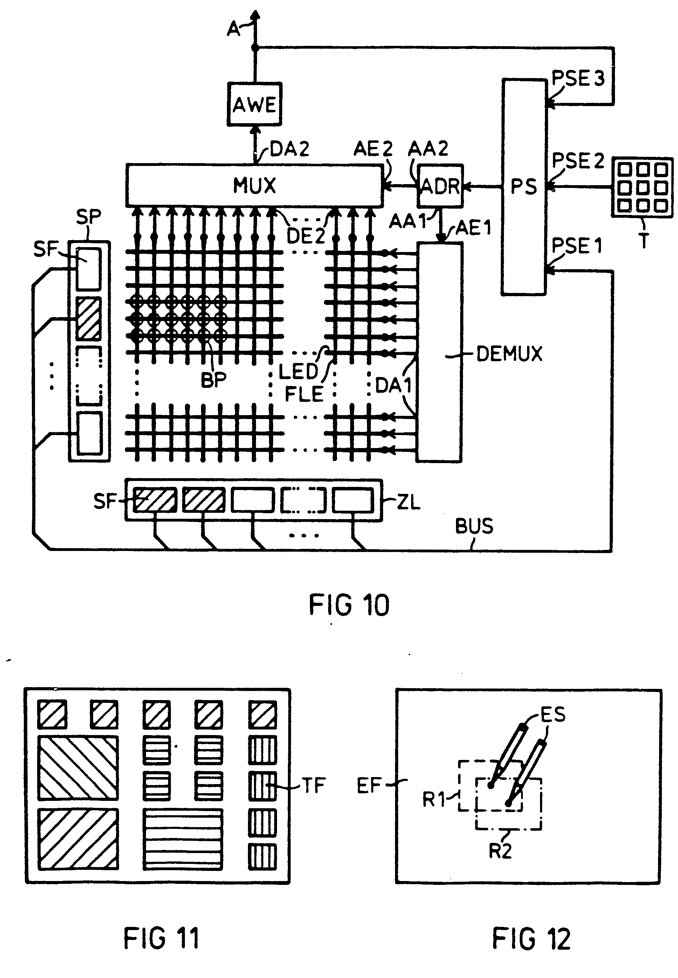

In Figur 10 ist der schaltungstechnische Aufbau eines bevorzugten Ausführungsbeispiels der erfindungsgemäßen Abtasteinrichtung dargestellt. Bei dem dargestellten Ausführungsbeispiel sind die Beleuchtungselemente in Form von zeilenweise angeordneten LED-Zeilen LED und die Lichtempfangselemente als spaltenweise angeordnete Fotoleiterstreifen FLE ausgebildet. Den LED-Zeilen LED ist eine Demultiplexeinrichtung DEMUX mit einer Vielzahl von Datenausgängen DA1 zugeordnet, von denen jeder Datenausgang DA1 an jeweils einer LED-Zeile LED angeschlossen ist. Die Demultiplexeinrichtung DEMUX weist einen Adresseneingang AE1 auf, über den eine Adressierung der Datenausgänge DA1 möglich ist; ihrer Funktion nach entspricht die Demultiplexeinrichtung DEMUX daher dem in Figur 9 gezeigten Analogschalter AS. Den Fotoleiterstreifen FLE ist eine Multiplexeinrichtung MUX zugeordnet, die eine Vielzahl von Dateneingängen DE2 aufweist, von denen jeder Dateneingang DE2 an jeweils einem Fotoleiterstreifen FLE angeschlossen ist. Die Multiplexeinrichtung MUX weist weiterhin einen Adresseneingang AE2 auf, über den eine Adressierung der Dateneingänge DE2 zum Durchschalten des an dem jeweils adressierten Dateneingang DE2 anliegenden Signals an einen Datenausgang DA2 der Multiplexeinrichtung MUX erfolgt. Der Adresseneingang AE1 der Demultiplexeinrichtung DEMUX sowie der Adresseneingang AE2 der Multiplexeinrichtung MUX sind jeweils mit einem Adressenausgang AE1 bzw. mit einem weiteren Adressenausgang AE2 einer Adressiereinrichtung ADR verbunden. Die Adressiereinrichtung ADR ist eingangsseitig an einer Programmsteuereinrichtung PS angeschlossen, in der in einem Programmablauf die Adressenwerte für die Demultiplexeinrichtung DEMUX und die Multiplexeinrichtung MUX berechnet werden. Die Berechnung der Adressenwerte erfolgt je nach Verwendungsfunktion der Abtasteinrichtung in Abhängigkeit von Eingabewerten, die der Programmsteuereinrichtung PS über Eingänge PSE1, PSE2 und PSE3 zugeführt werden. Der Eingang PSE1 der Programmsteuereinrichtung PS ist über einen Datenbus BUS mit berührungsempfindlichen Sensorfeldern SF verbunden, die am Rande der von den LED-Zeilen LED und den Fotoleiterstreifen FLE gebildeten Abtastfläche in einer Spalte SP und in einer Zeile ZL angeordnet sind. Dabei sind den in der Spalte angeordneten Sensorfeldern jeweils mehrere nebeneinanderliegende LED-Zeilen LED und den in der Zeile ZL angeordneten Sensorfeldern SF jeweils mehrere nebeneinanderliegende Fotoleiterstreifen FLE zugeordnet. Aufgrund der berührten Sensorfelder SF entlang der Spalte SP errechnet die Programmsteuereinrichtung PS die Anfangs- und Endadresse zur Steuerung der LED-Zeilen LED durch die Demultiplexeinrichtung DEMUX; ebenso werden aus den berührten Sensorfeldern SF entlang der Zeile ZL die Anfangs- und Endadresse zur Auswahl der Fotoleiterstreifen FLE durch die Multiplexeinrichtung MUX errechnet. Auf diese Weise wird ein Ausschnitt festgelegt, innerhalb dessen die optische Abtastung einer Vorlage erfolgt. Bei dem dargestellten Ausführungsbeispiel sind die berührten Sensorfelder SF durch Schraffur gekennzeichnet und die Bildpunkt BP des dadurch festgelegten Ausschnittes markiert. Zur anderweitigen Festlegung der Adressen abzutastenden Bildpunkte ist an einem weiteren Eingang PSE2 der Programmsteuereinrichtung PS ein Eingabegerät wie im dargestellten Fall eine Tastatur T angeschlossen. Ein zusätzlicher Eingang PSE3 der Programmsteuereinrichtung PS ist an dem Ausgang einer Auswerteeinrichtung AWE angeschlossen, die dem Datenausgang DEA2 der Mulitplexeinrichtung MUX nachgeordnet ist und deren Ausgang den Abtastsignalausgang A der Abtasteinrichtung bildet. Die Auswerteeinrichtung AWE enthält im wesentlichen die in Figur 9 gezeigten Schaltungselemente zur Filterung und Digitalisierung der am Ausgang DA2 der Multiplexeinrichtung MUX anstehenden Abtastsignale. Die in der Auswerteeinrichtung AWE ausgewerteten und digitalisierten Abtastsignale werden über den Eingang PSE3 der Programmsteuereinrichtung PS zugeführt, so daß in dieser die Abtastsignale der einzelnen Bildpunkte zusammen mit den jeweiligen von der Programmsteuereinrichtung PS errechneten zugehörigen Adressenwerten zur Verfügung stehen. Hieraus ergibt sich eine Vielzahl von Anwendungsmöglichkeiten der erfindungsgemäßen Abtasteinrichtung.

Figur 11 zeigt beispielsweise eine als Tastaturfolie ausgebildete Vorlage, bei der einzelne markierte teiltransparente Tastenfelder TF ausgebildet sind. Die Tastaturfolie wird von der erfindungsgemäßen Abtasteinrichtung abgetastet, wobei abgedeckte Tastenfelder aufgrund der veränderten optischen Abtastwerte von der Programmsteuereinrichtung PS erkannt werden. Aufgrund der Zuordnung der Adressenwerte zu den jeweiligen Abtastwerten kann das jeweilige abgedeckte Tastenfeld TF lokalisiert werden und eine entsprechende Tastenfunktion in der Programmsteuereinrichtung aufgerufen werden.

Figur 12 zeigt eine Eingabefolie EF, deren Reflektionsvermögen durch einen Eingabestift ES lokal veränderbar ist und die einen Einsatz der erfindungsgemäßen Abtasteinrichtung als Digitiser ermöglicht. Die Position des Eingabestiftes ES auf der Eingabefolie EF wird zu Beginn durch Abtastung der ganzen Eingabefolie EF lokalisiert. Um die lokalisierte Position wird ein rechteckförmiger Ausschnitt R1 festgelegt, dessen Koordinaten in der Programmsteuereinrichtung PS errechnet werden. Dieser Ausschnitt R1 wird wiederholt mit hoher Geschwindigkeit abgetastet. Bei bewegtem Eingabestift ES wird um die jeweils neu ermittelte Position ein neuer rechteckförmiger Ausschnitt R2 festgelegt. Die bei bewegtem Eingabestift ES ermittelten Koordinaten bzw. Adressen der Positionen können in einem Speicher der Programmsteuereinrichtung PS abgespeichert werden.

**Patentansprüche**

1. Abtasteinrichtung zur mikrozeilenweisen Beleuchtung und optischen Abtastung einer flächenhaften Vorlage (V) mit innerhalb einer Folie (F) angeordneten mikrozeilenindividuellen Beleuchtungselementen (B1 ... Bn), deren Längs- und Querabmessungen zumindest annähernd den Abmessungen der Mikrozeilen (M) entsprechen, und mit in einer parallelen Ebene zu den Beleuchtungselementen (B1 ... Bn) senkrecht zu den Mikrozeilen (M) angeordneten Lichtempfangselementen (L1 ... Lm), an deren Kreuzungspunkten mit jeweils einer beleuchteten Mikrozeile (M) das von dieser reflektierte Licht in die Lichtempfangselemente (L1 ... Lm) einkoppelbar ist,

dadurch gekennzeichnet,

daß die Lichtempfangselemente (L1 ... Lm) als Fotoleiterstreifen (F1, F2, F3) ausgebildet sind.

2. Abtasteinrichtung nach Anspruch 1,

dadurch gekennzeichnet, daß die Fotoleiterstreifen vorlagennäher als die Beleuchtungselemente angeordnet sind.

3. Abtasteinrichtung nach Anspruch 1 oder 2,

dadurch gekennzeichnet, daß die Fotoleiterstreifen jeweils eine Vielzahl von Fotoleiterelementen aufweisen, die in Längsrichtung des Fotoleiterstreifens jeweils in mikrozeilenindividuellen Abständen zueinander auf einer gemeinsamen transparenten Folienelektrode aufgebracht sind und daß die Fotoleiterelemente über eine kammförmige lichtundurchlässige Deckelektrode miteinander verbunden sind.

4. Abtasteinrichtung nach Anspruch 3,

dadurch gekennzeichnet, daß die jeweils entlang einer Mikrozeile angeordneten Fotoleiterelemente aller Fotoleiterstreifen aus einem einzigen zeilenförmigen Element bestehen und daß das jeweilige zeilenförmige Element in den Bereichen zwischen zwei benachbarten Deckelektroden lichtundurchlässig abgedeckt ist.

5. Abtasteinrichtung nach einem der vorangehenden Ansprüche,

dadurch gekennzeichnet, daß jeder Fotoleiterstreifen in wenigstens zwei in Längsrichtung des Fotoleiterstreifens hintereinander gelegene Teilstreifen aufgeteilt ist und daß eine der Zahl der Teilstreifen entsprechende Anzahl von Beleuchtungselementen, die jeweils verschiedene Teilstreifen eines Fotoleiterstreifens kreuzen, gleichzeitig ansteuerbar sind.

6. Abtasteinrichtung nach einem der Ansprüche 3 bis 5,

dadurch gekennzeichnet, daß den Fotoleiterelementen in Längsrichtung des Fotoleiterstreifens abwechselnd verschiedene Deckelektroden zugeordnet sind und daß die jeweils Fotoleiterelemente mit verschiedenen Deckelektroden kreuzenden Beleuchtungselemente gleichzeitig ansteuerbar sind.

7. Abtasteinrichtung nach einem der vorangehenden Ansprüche,

dadurch gekennzeichnet, daß bei Ausbildung der Beleuchtungselemente (B1 ... Bn) als Lichtleitkanäle (LK), in deren Stirnflächen das Licht einer Lichtquelle einkoppelbar ist, die Lichtleitkanäle (LK) auf ihren, der Vorlage abgewandten Seiten im Bereich jedes Bildpunktes entlang einer Mikrozeile quer zur Längsrichtung des Lichtleitkanals (LK) ausgerichtete Kerben (K) aufweisen und daß die der Lichtquelle zugewandten Kerbflächen unter einem Winkel von zumindest annähernd 45° gegen die Lichtleitkanalachse geneigt sind.

8. Abtasteinrichtung nach Anspruch 7,

dadurch gekennzeichnet, daß die Kerbtiefe von dem der Lichtquelle zugewandten Ende der Lichtleitkanäle (LF) an entlang derselben zunimmt.

9. Abtasteinrichtung nach Anspruch 7 oder 8,

dadurch gekennzeichnet, daß der Bereich zwischen den beiden Kerbflächen jeder Kerbe (K) mit einem Material mit geringerem Brechungsindex als dem des Lichtleitkanals (LK) ausgefüllt ist.

10. Abtasteinrichtung nach Anspruch 9, dadurch gekennzeichnet, daß die Austrittsbereiche jedes Lichtleitkanals (LK) durch eine entlang desselben fortschreitende lokale Aufhebung der Totalreflexion sukzessive aktivierbar sind.

11. Abtasteinrichtung nach Anspruch 10,

dadurch gekennzeichnet, daß die Lichtleitkanäle (LK) mittels eines Schallgenerators im Bereich ihrer Stirnflächen impulsweise erregt sind.

12. Abtasteinrichtuntg nach einem der Ansprüche 1 bis 6,

dadurch gekennzeichnet, daß die Beleuchtungselemente (B1 ... Bn) durch einzeln schaltbare Elektrolumineszenzzeilen (E1, E2, E3) eines Elektrolumineszenzdisplays ausgebildet sind.

13. Abtasteinrichtung nach einem der Ansprüche 1 bis 6,

dadurch gekennzeichnet, daß die Beleuchtungselemente durch einzeln steuerbare Lichttorzeilen gebildet sind, die auf ihrer der Vorlage abgewandten Seite beleuchtbar sind.

14. Abtasteinrichtung nach Anspruzch 13,

dadurch gekennzeichnet, daß die steuerbaren Lichttorzeilen aus einzeln ansteuerbaren Flüssigkristallzeilen bestehen.

15. Abtasteinrichtung nach einem der vorangehenden Ansprüche,

dadurch gekennzeichnet, daß zur bildpunktweisen Abtastung der Vorlage den Beleuchtungselementen (LED) eine Demultiplexeinrichtung (DEMUX) mit beleuchtungselementindividuellen Datenausgängen (DA1) zugeordnet ist, daß den Lichtempfangselementen (FLE) eine Multiplexeinrichtung (MUX) mit lichtempfangselementindividuellen Dateneingängen (DE2) und einem Datenausgang (DA2) nachgeordnet ist, an dem den abgetasteten Bildpunkten entsprechende elektrische Abtastsignale zur Verfügung stehen, daß der Demultiplexeinrichtung (DEMUX) und der Multiplexeinrichtung (MUX) eine Adressiereinrichtung (ADR) zugeordnet ist, die an einem Adressenausgang (AA1) mit einem Adresseneingang (AE1) der Demultiplexeinrichtung (DEMUX) und an einem weiteren Adressenausgang (AA2) mit einem Adresseneingang (AE2) der Multiplexeinrichtung (MUX) verbunden ist, und daß die Adressiereinrichtung (ADR) eingangsseitig an einer Programmsteuereinrichtung (PS) angeschlossen ist.

16. Abtasteinrichtung nach Anspruch 15, dadurch gekennzeichnet, daß dem Datenausgang (DA2) der Multiplexeinrichtung (MUX) eine Auswerteeinrichtung (AWE) nachgeordnet ist, die ausgangsseitig mit einem Abtastsignalausgang (A) der Abtasteinrichtung und mit einem Eingang (PSE3) der Programmsteuereinrichtung (PS) verbunden ist.

17. Abtasteinrichtung nach Anspruch 15 oder 16, dadurch gekennzeichnet, daß im Randbereich der Folie entlang einer Spalte (SP) und entlang einer Zeile (ZL) berührungsempfindliche Sensorfelder (SF) derart angeordnet sind, daß jedem Sensorfeld (SF) entlang der Spalte (SP) jeweils mehrere nebeneinanderliegende Beleuchtungselemente (LED) zugeordnet sind und jedem Sensorfeld (SF) entlang der Zeile (ZL) jeweils mehrere nebeneinanderliegende Lichtempfangselemente (FLE) zugeordnet sind, daß die berührungsempfindlichen Sensorfelder (SF) mit Dateneingängen (PSE1) der Programmsteuereinrichtung (PS) verbunden sind, die aus den berührten Sensorfeldern (SF) und der Anzahl der ihnen jeweils zugeordneten Beleuchtungslemente (LED) und Lichtempfangselemente (FLE) jeweils eine Anfangsadresse und eine Endadresse zur Aktivierung der Datenausgänge (DA1) der Demultiplexeinrichtung (DEMUX) bzw. zur Aktivierung der Dateneingänge (DE2) der Multiplexeinrichtung (MUX) errechnet.

18. Verwendung der Absteinrichtung nach einem der Ansprüche 15 bis 17, dadurch gekennzeichnet, daß zur manuellen Anwahl von Speicherplätzen eines mit der Abtasteinrichtung verbundenen elektronischen Speichers als Vorlage eine Tastaturfolie optisch abgetastet wird, die auf ihrer Oberfläche markierte Tastenfelder (TF) trägt und in den markierten Tastenfeldern (TF) zumindest teilweise transparente Bereiche aufweist, daß in der Programmsteuereinrichtung (PS) aus dem jeweiligen Abtastsignal an dem Datenausgang (DA2) der Multiplexeinrichtung (MUX) und aus den an den Adressenausgängen (AA1, AA2) der Adressiereinrichtung (ADR) anliegenden Adressenwerten abgedeckte Tastenfelder (TF) lokalisiert werden und daß in Abhängigkeit von den Adressenwerten der lokalisierten Tastenfelder (TF) die Anwahl der den einzelnen Tastenfeldern (TF) zugeordneten Speicherplätze erfolgt.

19. Verwendung nach Anspruch 18, dadurch gekennzeichnet, daß von der Abtasteinrichtung eine auf der Tastaturfolie aufgebrachte Identifizierungsmarkierung abgetastet wird, daß in der Programmsteuereinrichtung (PS) das durch Abtasten der Identifizierungsmarkierung erzeugte Abtastsignal mit gespeicherten Identifizierungswörtern verglichen wird und daß bei Übereinstimmung zwischen dem Abtastsignal und einem der Identifizierungswörter ein Programmzugriff auf ein dem Identifizierungswort zugeordnetes Programmteil erfolgt.

20. Verfahren zum Betreiben der Abtasteinrichtung nach einem der Ansprüche 15 bis 17, dadurch gekennzeichnet, daß zur Gewinnung von die jeweilige Position eines Eingabestiftes (ES) auf der Vorlage kennzeichnenden Adressen als Vorlage eine Eingabefolie (EF) verwendet wird, deren Reflexionsvermögen lokal über den Eingabestift (ES) veränderbar ist, daß in der Programmsteuereinrichtung (PS) durch erstmalige Abtastung der gesamten Eingabefolie (EF) die (Anfangs-) Position des Eingabestiftes (ES) auf der Eingabefolie (EF) ermittelt wird und daß nach Ermittlung der (Anfangs-) Position des Eingabestiftes (ES) fortlaufend die Eingabefolie (EF) in einem rechteckförmigen Ausschnitt (R1) um die Position des Eingabestiftes (ES) herum abgetastet wird, wobei nach jedem Abtasten des rechteckförmigen Ausschnittes (R1) in Abhängigkeit von der jeweils ermittelten Position des Eingabestiftes (ES) die Lage des Abtastausschnittes (R2) um die Position herum neu berechnet wird.

21. Verfahren nach Anspruch 20, dadurch gekennzeichnet, daß die lokale Änderung des Reflexionsvermögens der Eingabefolie durch lokale Druckbeanspruchung der Eingabefolie mit dem Eingabestift erfolgt.

22. Verfahren nach Anspruch 21, dadurch gekennzeichnet, daß durch die lokale Druckbeanspruchung die Ausrichtung von Flüssigkristallen einer Flüssigkristallschicht zwischen zwei transparenten Deckschichten der Eingabefolie verändert wird.

23. Verfahren nach Anspruch 21, dadurch gekennzeichnet, daß durch die lokale Druckbeanspruchung eine farbige Flüssigkeit lokal aus dem Bereich zwischen zwei transparenten Deckschichten der Eingabefolie verdrängt wird.

24. Verfahren nach Anspruch 20, dadurch gekeneichnet, daß die Eingabefolie eine temperaturempfindliche Farbschicht enthält und daß die lokale Änderung des Reflexionsvermögens der Eingabefolie durch lokale Aufheizung der Eingabefolie mit dem Eingabestift erfolgt.

**Revendications**

1. Dispositif de balayage pour l'éclairage et l'exploration optique microligne par microligne d'un document plan (V) à analyser, comprenant des éléments d'éclairage (B1 ... Bn) associés individuellement à une ligne microscopique ou microligne et disposés à l'intérieur d'une feuille (F), éléments dont les dimensions longitudinales et transversales correspondent au moins à peu près aux dimensions des microlignes (M), ainsi que des éléments récepteurs de lumière (L1 ... Lm) disposés dans un plan parallèle aux éléments d'éclairage (B1 ... Bn), transversalement aux microlignes (M), aux croisements desquels avec une microligne (M) éclairée, la lumière réfléchie par celle-ci peut être introduite dans les éléments récepteurs de lumière (L1 ... Lm), caractérisé en ce que les éléments récepteurs de lumière (L1 ... Lm) sont réalisés comme des bandes ou rubans photoconducteurs (F1, F2, F3).

2. Dispositif selon la revendication 1, caractérisé en ce que les rubans photoconducteurs sont disposés plus près du document que les éléments d'éclairage.

3. Dispositif selon la revendication 1 ou 2, caractérisé en ce que les rubans photoconducteurs comportent chacun un grand nombre d'éléments photoconducteurs qui sont disposés sur une électrode commune, constituée par une feuille transparente, dans le sens de la longueur du ruban photoconducteur et avec des espacements mutuels coordonnés individuellement à une microligne, et que les éléments photoconducteurs sont reliés entre eux par une électrode de recouvrement opaque en forme de peigne.

4. Dispositif selon la revendication 3, caractérisé en ce que les éléments photoconducteurs, disposés chaque fois le long d'une microligne, de tous les rubans photoconducteurs sont constitués par un seul élément en forme de ligne et que chaque élément en forme de ligne est recouvert de façon opaque dans les régions comprises entre deux électrodes de recouvrement voisines.

5. Dispositif selon une des revendications précédentes, caractérisé en ce que chaque ruban photoconducteur est subdivisé en au moins deux rubans partiels placés l'un derrière l'autre dans le sens de la longueur du ruban photoconducteur et qu'un nombre d'éléments d'éclairage, égal au nombre des rubans partiels et croisant chaque fois différents rubans partiels d'un ruban photoconducteur, peuvent être commandés simultanément.

6. Dispositif selon une des revendications 3 à 5, caractérisé en ce que différentes électrodes de recouvrement sont associées alternativement aux éléments photoconducteurs dans le sens de la longueur du ruban photoconducteur et que les éléments d'éclairage croisant des éléments photoconducteurs avec des électrodes de recouvrement différentes, peuvent être commandés simultanément.

7. Dispositif selon une des revendications précédentes, caractérisé en ce que, en cas de réalisation des éléments d'éclairage (B1 ... Bn) comme des canaux conducteurs de lumière dans les faces extrêmes desquels peut être injectée la lumière d'une source lumineuse, les canaux conducteurs de lumière (LK) présentent, sur leurs côtés éloignés du document, dans la région de chaque point d'image, le long d'une microligne, des encoches (K) orientées transversalement à la direction longitudinale du canal conducteur de lumière (LK), et que les faces des encoches dirigées vers la source lumineuse sont inclinées d'un angle d'au moins 45° environ sur l'axe du canal conducteur de lumière.

8. Dispositif selon la revendication 7, caractérisé en ce que la profondeur des encoches augmente le long des canaux conducteurs de lumière (LF) à partir de l'extrémité située du côté de la source lumineuse.

9. Dispositif selon la revendication 7 ou 8, caractérisé en ce que l'espace compris entre les deux faces de chaque encoche (K) est rempli avec un matériau tout l'indice de réfraction est inférieur à celui du canal conducteur de lumière (LK).

10. Dispositif selon la revendication 9, caractérisé en ce que les zones de sortie de chaque canal conducteur de lumière (LK) sont susceptibles d'être activées successivement par la suppression locale de la réflexion totale, suppression qui progresse le long du canal.

11. Dispositif selon la revendication 10, caractérisé en ce que les canaux conducteurs de lumière (LK) sont excités par impulsions, dans la région de leurs faces d'extrémité, au moyen du générateur de son.

12. Dispositif selon une des revendications 1 à 6, caractérisé en ce que les éléments d'éclairage (B1 ... Bn) sont constitués par des lignes électroluminescentes (E1, E2, E3) pouvant être commandées séparément et faisant partie d'un affichage électroluminescent.

13. Dispositif selon une des revendications 1 à 6, caractérisé en ce que les éléments d'éclairage sont constitués par des lignes de portes de lumière, susceptibles d'être commandées séparément, qui peuvent être éclairées sur leur côté éloigné du document.

14. Dispositif selon la revendication 13, caractérisé en ce que les lignes de portes de lumière, pouvant être commandées, sont constituées par des lignes de cristaux liquides susceptibles d'être commandées séparément.

15. Dispositif selon une des revendications précédentes, caractérisé en ce que, pour l'analyse du document point d'image par point d'image, un démultiplexeur (DEMUX) avec des sorties de données (DA1) associées individuellement aux éléments d'éclairage, est coordonné aux éléments d'éclairage (LED), que les éléments récepteurs de lumière (FLE) sont suivis par un multiplexeur (MUX), possédant des entrées de données (DE2) associées individuellement aux éléments récepteurs de lumière, de même qu'une sortie de données (DA2), sur laquelle sont présentés des signaux électriques de balayage correspondant aux points d'image explorés, qu'un dispositif d'adressage (ADR) est associe au démultiplexeur (DEMUX) et au multiplexeur (MUX), dispositif qui est connecté par une sortie d'adresse (AA1) à une entrée d'adresse (AE1) du démultiplexeur (DEMUX) et par une autre sortie d'adresse (AA2) à une entrée d'adresse (AE2) du multiplexeur (MUX), et que le dispositif d'adressage (ADR) est connecté par son entrée à un dispositif de commande à programme (PS).

16. Dispositif selon la revendication 15, caractérisé en ce que la sortie des données (DA2) du multiplexeur est suivie d'un dispositif d'exploitation (AWE) qui est connecté, côté sortie, à une sortie de signal de balayage (A) du dispositif de balayage et à une entrée (PSE3) du dispositif de commande à programme (PS).

17. Dispositif selon la revendication 15 ou 16, caractérisé en ce que des plages détectrices (SF) sensibles à l'attouchement, sont disposées, dans la zone du bord de la feuille, le long d'une colonne (SP) et le long d'une rangée (ZL), de manière que plusieurs éléments d'éclairage (LED) juxtaposés soient coordonnés à chaque plage détectrice (SF) le long de la colonne (SP) et que plusieurs éléments récepteurs de lumière (FLE) juxtaposés soient coordonnés à chaque plage détectrice (SF) le long de la rangée (ZL), que les plages détectrices (SF), sensibles à l'attouchement, sont connectées à des entrées de données (PSE1) du dispositif de commande à programme (PS), lequel calcule chaque fois, à partir des plages détectrices (SF) touchées et du nombre des éléments d'éclairage (LED) et des éléments récepteurs de lumière (FLE) qui leur sont coordonnés, une adresse initiale et une adresse finale pour activer les sorties de données (DA1) du démultiplexeur (DEMUX) et pour activer les entrées de données (DE2) du multiplexeur (MUX).

18. Utilisation du dispositif de balayage selon une des révendications 15 à 17, caractérisée en ce que, pour la sélection manuelle d'emplacements de mémorisation d'une mémoire électronique raccordée au dispositif de balayage, le document exploré optiquement est une feuille clavier portant à sa surface des plages de touches (TF) marquées et présentant, des zones au moins partiellement transparentes dans ces plages, que des plages de touches (TF) occultées sont localisées, dans le dispositif de commande à programme (PS), à partir du signal de balayage présenté sur la sortie de données (DA2) du multiplexeur (MUX) et à partir des valeurs d'adresse présentées sur les sorties d'adresse (AA1, AA2) du dispositif d'adressage (ADR), et que la sélection des emplacements de mémorisation, coordonnés aux différentes plages de touches (TF), s'opère en fonction des valeurs d'adresse des plages de touches (TF) localisées.

19. Utilisation selon la revendication 18, caractérisée en ce que le dispositif de balayage explore un marquage d'identification apposé sur la feuille clavier, que le signal de balayage généré par l'exploration du marquage d'identification est comparé dans le dispositif de commande à programme (PS) avec des mots identificateurs mémorisés et que la concordance entre le signal de balayage et l'un des mots identificateurs provoque l'accès à une partie de programme coordonnée à ce mot identificateur.

20. Procédé pour la mise en oeuvre du dispositif de balayage selon une des revendications 15 à 17, caractérisé en ce que, pour obtenir des adresses définissant la position instantanée d'une tige marqueur d'entrée (ES) sur le document, on utilise, en tant que document, une feuille d'entrée (EF) dont le pouvoir de réflexion est modifiable localement par la tige d'entrée (ES), que la position (initiale) de la tige (ES) sur la feuille d'entrée (EF) est déterminée dans le dispositif de commande à programme (PS) par une première exploration de toute la feuille (EF), et que, après la détermination de la position (initiale) de la tige (ES), la feuille d'entrée (EF) est explorée continûment dans un secteur (R1) de forme rectangulaire autour de la position de la tige (ES), secteur dont l'emplacement éventuellement changé (R2) autour de la tige, est recalculé, après chaque exploration du secteur rectangulaire (R1), en fonction de la position nouvellement déterminée de la tige (ES).

21. Procédé selon la revendication 20, caractérisé en ce que la modification locale du pouvoir de réflexion de la feuille d'entrée résulte de l'application locale d'une pression à la feuille par la tige d'entrée.

22. Procédé selon la revendication 21, caractérisé en ce que l'application locale de la pression change l'orientation de cristaux liquides dans une couche de cristaux liquides entre deux couches de recouvrement transparentes de la feuille d'entrée.

23. Procédé selon la revendication 21, caractérisé en ce que l'application locale de la pression provoque, à l'endroit considéré, le refoulement d'un liquide coloré hors de la région comprise entre deux couches de recouvrement transparentes de la feuille d'entrée.

24. Procédé selon la revendication 20, caractérisé en ce que la feuille d'entrée contient une couche de couleur sensible à la température et que la modification locale du pouvoir de réfléxion de la feuille résulte d'un échauffement local de la feuille par la tige d'entrée.

**Claims**

1. Scanning device for micro-linear illumination and optical scanning of a planar copy (V) with individual micro-linear illuminating elements (B1 .. Bn) arranged within a film (F), the longitudinal and cross dimensions of which correspond at least approximately to the dimensions of the micro lines (M) and with light receiving elements (L1 ... Lm) arranged in a parallel plane to the illuminating elements (B1 ... Bn) and perpendicular to the micro lines (M), at the crossing points of which, with, in each case, an illuminated micro line (M), the light reflected by this is able be coupled into the light receiving elements (L1 ...Lm),

characterised in that,

the light receiving elements (L1 ... Lm) are constructed as photo-conductive strips (F1, F2, F3).

2. Scanning device according to claim 1, characterised in that the photo-conductive strips are arranged as the illuminating elements close to the copy.

3. Scanning device according to claim 1 or 2, characterised in that the photoconductive strips have in each case a plurality of photo-conductive elements, which, in the longitudinal direction of the photo-conductive strip in each case at individual micro line spaces from each, are attached on a common transparent film electrode and in that the photoconductive elements are connected to each other by way of a comb-shaped cover electrode impervious to light.

4. Scanning device according to claim 3, characterised in that the photo-conductive elements of all photo-conductive strips arranged respectively along a micro line consist of a single line-shaped element and in that the respective line-shaped element in the regions between two adjoining cover electrodes is covered such that it is impervious to light.

5. Scanning device according to one of the preceding claims, characterised in that each photoconductive strip is split into at least two partial strips laid one behind another in the longitudinal direction of the photo-conductive strip and in that a number of illuminating elements corresponding to the number of partial strips, which in each case cross different partial strips of a photo-conductive strip, are able to be controlled at the same time.

6. Scanning device according to one of claims 3 to 5, characterised in that assigned to the photo-conductive elements in the longitudinal direction of the photoconductive strip there are various alternate cover electrodes and in that the respective photo-conductive elements are able to be controlled simultaneously with illuminating elements crossing various cover electrodes.

7. Scanning device according to one of the preceding claims, characterised in that when constructing the illuminating elements (B1 ...Bn) as light conductive channels (LK), in the front sides of which the light of a light source is able to be coupled, the light conductive channels (LK) have, on their sides facing away from the copy, in the region of each pixel, along a micro line, grooves (K) aligned transverse to the longitudinal direction of the light conductive channel (LK) and in that the groove faces facing the light source are inclined at an angle of at least approximately 45° against the light conductive channel axis.

8. Scanning device according to claim 7, characterised in that the groove depth increases from the end of the light conductive channels (LF) facing the light source along the same.

9. Scanning device according to claim 7 or 8, characterised in that the region between both groove faces of each groove (K) is filled with a material with a smaller refractive index than that of the light conductive channel (LK).

10. Scanning device according to claim 9, characterized in that the outlet regions of each light conductive channel (LK) are able to be activated successively by a local cancellation of the total reflection advancing along the same.

11. Scanning device according to claim 10, characterised in that the light conductive channels (LK) are excited impulsively by means of a sonic generator, in the region of their front surfaces.

12. Scanning device according to one of claims 1 to 6, characterized in that the illuminating elements (B1 ... Bn) are constructed by individually switchable electro luminescent lines (E1, E2, E3) of an electro luminescent display.

13. Scanning device according to one of claims 1 to 6, characterised in that the illuminating elements are formed by individually controllable light gate lines which are able to be illuminated on their side facing away from the copy.

14. Scanning device according to claim 13, characterised in that the controllable light gate lines consist of individually controllable liquid crystal lines.

15. Scanning device according to one of the preceding claims, characterized in that for pixel scanning of the copy a demultiplex device (DEMUX) with individual illuminating elements data outputs (DA1) is assigned to the illuminating elements (LED), in that arranged after the light receiving elements (FLE) there is a multiplex device with individual light receiving element data inputs (DE2) and a data output (DA2), on which electric scanning signals corresponding to the scanning pixels are available, in that an addressing device (ADR) is assigned to the demultiplex device (DEMUX) and the multiplex device (MUX), which, at an address output (AA1) is connected to an address input (AE1) of the demultiplex device (DEMUX) and at a further address output (AA2) to an address input (AE2) of the multiplex device (MUX), and in that the addressing device (ADR) is attached on the input side to a program control device (PS).

16. Scanning device according to claim 15, characterized in that arranged after the data output (DA2) of the multiplex device (MUX) there is an evaluating device (AWE) which is connected on the output side to a scanning signal output (A) of the scanning device and to an input (PSE3) of the program control device (PS).

17. Scanning device according to claim 15 or 16, characterised in that in the edge region of the film touch-sensitive sensor fields (SF) are arranged along a gap (SP) and along a line (ZL) in such a way that assigned to each sensor field (SF) along the gap (SP) there are in each case several illuminating elements (LED) lying next to each other and assigned to each sensor field (SF) along the line (ZL) there are in each case several light receiving elements (FLE) lying next to each other, and in that the touch sensitive sensor fields (SF) are connected to data inputs (PSE1) of the program control device (PS) which from the touched sensor fields (SF) and the number of illuminating elements (LED) and light receiving elements (FLE) assigned to them in each case calculates in each case an initial address and a terminal address for activating the data outputs (DA1) of the demultiplex device (DEMUX) or for activating the data inputs (DE2) of the multiplex device (MUX).

18. Use of the scanning device according to one of claims 15 to 17, characterized in that for manual selection of the memory locations of an electronic memory connected to the scanning device, a keyboard film is optically scanned as the copy which bears on its upper surface marked keypads (TF) and has in the marked keypads (TF) at least partly transparent regions, in that in the program control device (PS) covered keypads (TF) are localized from the respective scanning signal on the data output (DA2) of the multiplex device (MUX) and from the address values attached to the address outputs (AA1, AA2) of the address device (ADR) and in that, depending on the address values of the localized keypads (TF) the selection of the memory locations assigned to the individual keypads (TF) results.

19. The use according to claim 18, characterized in that, an identification marking applied to the keyboard film is scanned by the scanning device, in that in the program control device (PS) the scanning signal, produced by scanning of the identification marking is compared with the stored identification words and in that by correlating between the scanning signal and one of the identification words a program access on one of the program units assigned to the identification words results.

20. Method of driving the scanning device according to one of claims 15 to 17, characterized in that for gaining addresses characterizing the respective position of an input pin (ES) on the copy an input film (EF) is used as copy, the reflecting power of which is able to be altered locally by way of the input pin (ES), in that in the program control device (PS) the (initial) position of the input pin (ES) on the input film (EF) is established by initial scanning of the whole input film (EF) and in that after establishing the (initial) position of the input pin (ES) the input film (EF) is scanned continuously in a rectangular section (R1) around the position of the input pin (ES), whereby according to each scanning of the rectangular section (R1), depending on the respective established position of the input pin (ES), the position of the scanning section (R2) around the position is calculated anew.

21. Method according to claim 20, characterized in that the local change of the reflecting power of the input film occurs by local compressive stress of the input film with the input pin.

22. Method according to claim 21, characterised in that by the local compressive stress the alignment of liquid crystals of a liquid crystal layer is changed between two transparent cover layers of the input film.

23. Method according to claim 21, characterised in that by the local compressive stress a coloured liquid is displaced locally from the region between two transparent cover layers of the input film.

24. Method according to claim 20, characterized in that the input film contains a temperature sensitive coloured layer and that local change of their reflective power of the input film occurs by local heating of the input film with the input pin.

EP 0 177 436 B1

FIG. 1

FIG. 5

FIG. 6

FIG. 2

FIG. 3

FIG. 4

FIG. 7

FIG. 8

5

FIG. 9

FIG 10

FIG 11

FIG 12